# FASCICULE DE BREVET EUROPEEN

(11) **EP 1 040 985 B1**
(45) Date de publication et mention de la délivrance du brevet: **13.08.2003**
(21) Numéro de dépôt: 00400895.9
(22) Date de dépôt: 31.03.2000
(51) Int. Cl.: B62D 35/00

(54) **Véhicule automobile à élément aérodynamique escamotable**
Kraftfahrzeug mit einem klappbarem Flügelprofil
Motor vehicle with a pivotable airfoil

(30) Priorité: 01.04.1999 FR 9904087
(43) Date de publication de la demande: 04.10.2000
(73) Titulaire: Rehau S.A., 57343 Morhange Cedex (FR); Renault s.a.s., 92100 Boulogne Billancourt (FR)
(72) Inventeur: Pennerath, Eddy, 57450 Henriville (FR); Liadouze, Alain, 78503 Buc (FR); Bourdassol, Claude, 78210 St. Cyr (FR)
(74) Mandataire: Eidelsberg, Victor Albert

(56) Documents cités:
- DE-A- 2 549 493
- DE-A- 2 935 635
- US-A- 4 659 130

## Description

La présente invention se rapporte à un véhicule automobile terrestre comportant un bouclier avant et un spoiler avant disposé sous le bouclier avant du véhicule automobile et pouvant passer d'une première position escamotée ou de repos à une seconde position non escamotée ou active dans laquelle il empêche, au moins en partie, le flux d'air créé par la vitesse du véhicule automobile de passer sous le bouclier avant et améliore donc l'aérodynamisme du véhicule. L'invention se rapporte également à un spoiler avant destiné à être utilisé dans des véhicules automobiles de ce genre.

On connaît déjà un véhicule automobile de ce genre dans lequel le spoiler avant passe de la position de repos à la position active sous l'effet de moyens d'actionnement électriques, pneumatiques ou hydrauliques. L'asservissement du spoiler s'effectue comme suit. A petite vitesse ou à l'arrêt du véhicule, il est en position de repos, et lorsque la vitesse atteint une certaine valeur, le système électrique, pneumatique ou hydraulique commande le passage du spoiler de la position de repos à la position active. Au delà de la vitesse de seuil, le spoiler reste en position active. Ce système électrique, pneumatique ou hydraulique d'asservissement du spoiler est coûteux et complexe à installer dans le véhicule.

Au brevet des Etats-Unis d'Amérique n° 4 131 308, on propose un véhicule automobile dans lequel des moyens élastiques appliquent au spoiler une force antagoniste de celle appliquée par le flux d'air tendant à le ramener dans la position de repos, la raideur de ces moyens élastiques étant telle que, lorsque la vitesse du véhicule est inférieure à la vitesse prescrite, la force des moyens élastiques est supérieure à celle appliquée par le flux d'air et le spoiler est maintenu en position de repos et lorsque la vitesse dépasse la vitesse prescrite, la force des moyens élastiques est inférieure à celle appliquée par le flux d'air et le spoiler passe en position active.

Au DE-A-25 49 493, on décrit un spoiler selon le préambule de la revendication 1. Il est constitué d'une matière élastique ménageant deux charnières de section transversale différente. Il s'escamote et n'est pas détruit en présence d'un obstacle alors qu'il est en position active. Le spoiler passe progressivement de la position de repos à la position active, ce qui est un inconvénient. Sa course est trop limitée pour qu'il puisse bien s'escamoter. Sa constitution est complexe et il est difficile à régler.

L'invention pallie ces inconvénient par un véhicule automobile dans lequel le spoiler passe d'un coup de la position de repos à la position active et s'escamote correctement sans être détruit, mais dont l'agencement est bien plus simple et bien plus fiable que celui du DE-A-25 49 493.

Le véhicule suivant l'invention est défini à la revendication 1. Des perfectionnements sont définis dans les sous-revendications.

Suivant l'invention, le véhicule automobile comporte un bouclier avant au bas duquel est monté un spoiler de manière à passer d'un coup d'une première position escamotée ou de repos à une seconde position non escamotée ou active dans laquelle il empêche au moins en partie le flux d'air créé par le déplacement du véhicule de passer sous le véhicule, et il est prévu des premiers moyens élastiques sous la forme d'un premier ressort appliquant au spoiler une force antagoniste de celle appliquée par le flux d'air tendant à le ramener dans la position de repos, la raideur du premier ressort étant telle que lorsque la vitesse du véhicule est inférieure à la vitesse prescrite, la force du premier ressort est supérieure à celle appliquée par le flux d'air et le spoiler est maintenu en position de repos et lorsque la vitesse dépasse la vitesse prescrite, la force du premier ressort est inférieure à celle appliquée par le flux d'air et le spoiler passe en position active. Il est prévu des seconds moyens élastiques sous la forme d'un second ressort de plus grande raideur que le premier ressort et disposé de manière à n'agir sur le spoiler que lorsque celui-ci a atteint la position active. En revanche, si le véhicule vient à rencontrer un obstacle, les forces appliquées au spoiler l'emportent sur le second ressort qui cède et qui permet au spoiler de s'escamoter, et cela, en poursuivant sa course au-delà de sa position active dans le même sens de basculement que celui qui correspond au passage de la position de repos à la position active et non pas, comme au brevet des Etats-Unis d'Amérique n° 4 159 140, en allant dans le sens le menant à la position de repos. L'escamotage dans le sens que permet l'invention est plus naturel et, dès que l'obstacle est franchi, le spoiler revient à la position active sous l'action positive du second ressort. Le montage du spoiler est des plus simples, puisque les deux ressorts peuvent être tarés et enfilés et montés sur le même axe en usine. Il suffit ensuite de monter un simple axe sur le véhicule.

Le second ressort peut être constitué d'un ressort à compression, d'un ressort de traction, ou, de préférence, d'un ressort de torsion tout comme le premier ressort.

L'invention vise également un spoiler ayant les caractéristiques de la revendication 4.

Au dessin annexé, donné uniquement à titre d'exemple,
la figure 1 est un schéma d'une partie d'un véhicule automobile ayant le spoiler selon l'état de la technique,
la figure 2 représente trois étapes du fonctionnement du spoiler suivant la figure 1, et
la figure 3 et la figure 4 sont des schémas de spoiler à ressorts suivant l'invention.

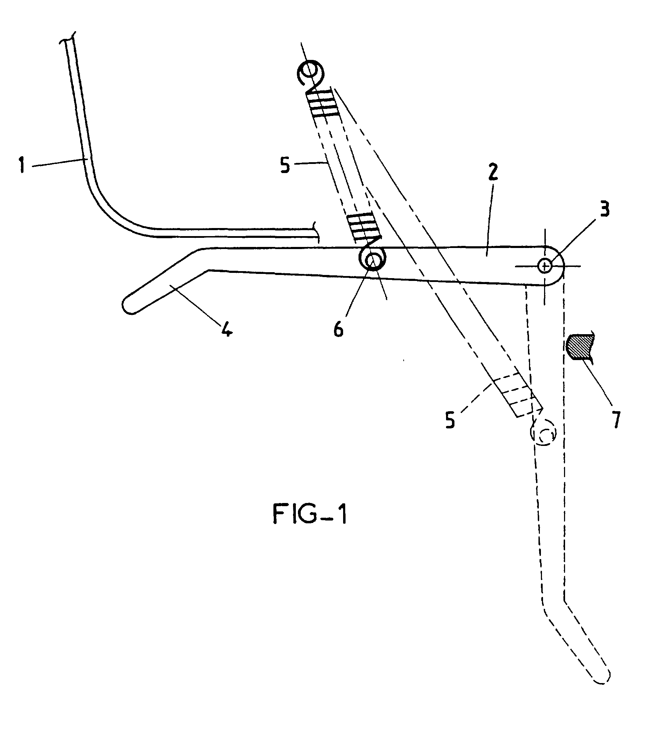

A la figure 1, est représenté un véhicule automobile comportant un bouclier 1 et un spoiler. Le spoiler comprend un volet 2 rectangulaire monté basculant par son bord supérieur sur un axe 3 entre une position de repos où la partie principale du volet 2 est à l'horizontale au même niveau que l'axe 3 et une position où le volet 2 est vertical. La partie 4 d'extrémité du volet 2 est coudée à environ 45 degrés, de sorte que le flux d'air applique à cette partie 4 d'extrémité du volet une force dont la direction ne passe pas par l'axe 3. En outre, l'extrémité d'un ressort 5 est fixée à la carrosserie du véhicule (non représentée), tandis que l'autre extrémité est fixée en un point 6 du volet 2.

Lorsque la vitesse du véhicule est petite ou nulle (véhicule en stationnement), le flux d'air est également petit ou nul et la force du ressort 5 de rappel exercée sur le volet 2 est supérieure à la force de poussée sur la partie 4. Le volet 2 reste donc en position de repos, sensiblement horizontalement. Lorsque la vitesse du véhicule augmente, le flux d'air augmente en conséquence, et la force appliquée par le flux d'air vient à dépasser celle appliquée par le ressort 5. Au-delà d'une valeur de seuil qui peut être réglée par la raideur du ressort 5, le volet 2 passe en position active (comme indiqué en tiret à la figure), en l'occurrence en position verticale.

Pour que le volet 2 prenne une position sensiblement verticale aux grandes vitesses, on prévoit comme second moyens élastiques une butée 7 élastique en caoutchouc qui est fixée à la carrosserie et sur laquelle le volet 2 vient s'appuyer en positon verticale.

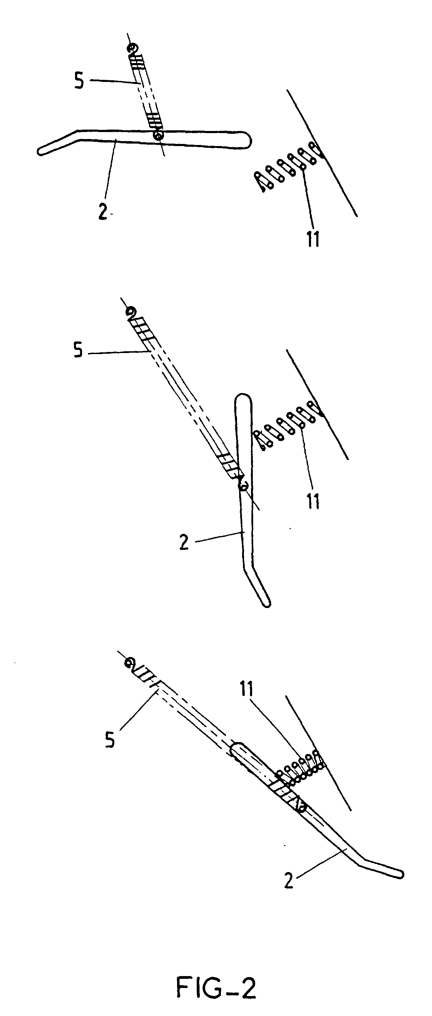

Au lieu de la butée 7, on peut également, comme cela est représenté à la figure 2, prévoir un second ressort 11 fixé à la carrosserie à une de ses extrémités et agissant comme butée par son autre extrémité pour le volet 2, lorsque celui-ci est en position active.

La figure 2 présente l'action des ressorts 5 et 11 sur le volet 2 dans plusieurs positions.

Dans une première position, position de repos (en haut à la figure) le volet 2 est maintenu en position de repos par le ressort 5 de traction, tandis que le ressort 11 est en position libre.

Lorsqu'un flux d'air suffisamment grand agit sur le volet 2, le ressort 5 est étiré et le volet 2 vient buter sur le ressort 11 (au milieu à la figure). Le volet 2 est en position verticale active. La raideur du ressort 11 est réglée de sorte que le ressort 11 ne peut pas être comprimé sous l'effet du flux d'air. Le ressort 11 est plus raide que le ressort 5.

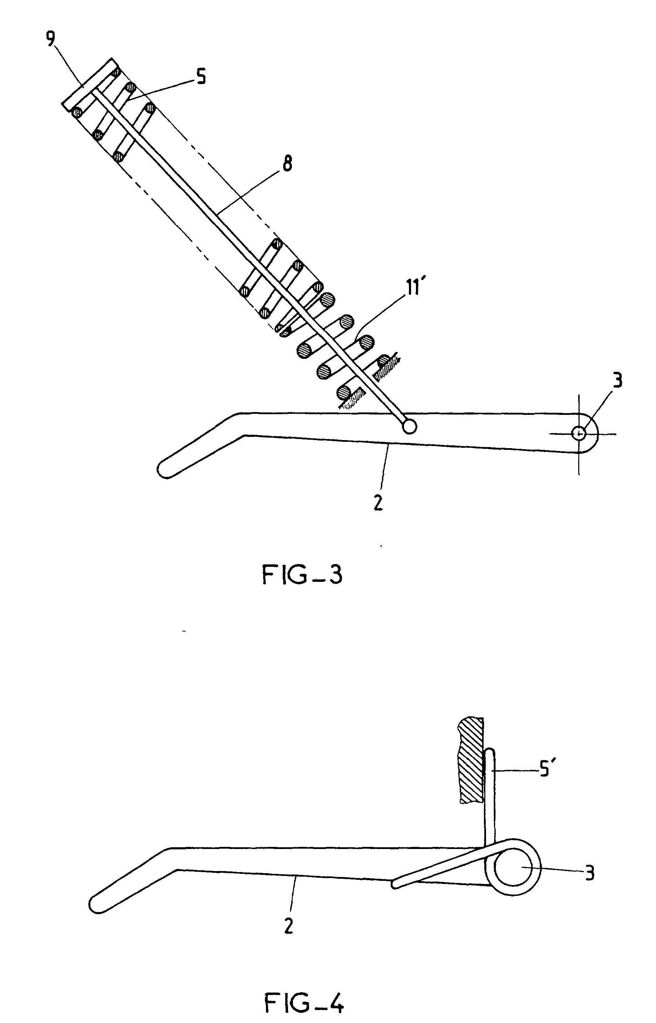

La figure 3 représente un mode de réalisation d'un spoiler suivant l'invention. En position verticale active, le ressort 5 de compression enfilé sur un axe 8 est comprimé à spires jointives par une assiette 9. Le ressort 11' de compression, lui aussi enfilé sur l'axe 8, ne peut pas être comprimé par le flux d'air, sa raideur étant très grande. Il ne se comprime que sous l'effet d'un obstacle pour permettre l'effacement du volet 2, puis son retour en position verticale après passage de l'obstacle. L'axe 8 est monté sur la carrosserie

A la figure 4, il est représenté une variante du ressort 5 faible. Il y est prévu un ressort 5' de torsion monté sur l'axe 3 de basculement du volet 2. Le couple de torsion exercé par le ressort 5' sur le volet 2 a les mêmes effets que la force du ressort 5 sur le volet 2 à la figure 1. La constante de couple du ressort 5' à torsion est réglée de manière à maintenir le volet 2 en position de repos en l'absence de flux d'air. On associe à ce ressort 5' un autre ressort de torsion (non représenté) de plus grande raideur que le ressort 5' et qui est monté de manière à empêcher le volet 2 de passer au-delà de la position verticale, lorsque de grands flux d'air actionnent le volet 2, mais qui cède en cas de choc sur un obstacle.

## Revendications

1. Spoiler pour véhicule automobile comportant un bouclier (1) avant au bas duquel est monté ledit spoiler (2;2') de manière à passer d'une première position escamotée ou de repos à une seconde position non escamotée ou active dans laquelle il empêche au moins en partie le flux d'air créé par le déplacement du véhicule de passer sous le véhicule, ledit spoiler comprenant des premiers moyens (5, 5') élastiques appliquant au spoiler (2;2') une force antagoniste de celle appliquée par le flux d'air tendant à le ramener dans la position de repos, la raideur des premiers moyens (5, 5') élastiques étant telle que lorsque la vitesse du véhicule est inférieure à la vitesse prescrite, la force des premiers moyens élastiques est supérieure à celle appliquée par le flux d'air et le spoiler est maintenu en position de repos et lorsque la vitesse dépasse la vitesse prescrite, la force des premiers moyens élastiques est inférieure à celle appliquée par le flux d'air et le spoiler passe en position active et des seconds moyens (7; 11 ; 11') élastiques de plus grande raideur que les premiers moyens (5, 5') élastiques et disposés de manière à n'agir sur le spoiler (2, 2') que lorsque celui-ci a atteint la position active, **caractérisé en ce que** les premiers moyens élastiques et les seconds moyens élastiques sont respectivement deux ressorts (5, 5', 11') enfilés sur un seul et même axe (3, 8) monté sur le véhicule.

2. Spoiler suivant la revendication 1, **caractérisé en ce que** les ressorts sont tous deux constitués soit d'un ressort à compression, soit d'un ressort de traction (5), soit, de préférence, d'un ressort de torsion.

3. Spoiler suivant la revendication 2, **caractérisé en ce que** les premier et second ressorts de torsion sont montés sur l'axe de basculement du spoiler (2).

4. Véhicule comprenant un spoiler à ressorts, tel que défini à l'une des revendications 1, 2 ou 3.

## Patentansprüche

1. Spoiler für Kraftfahrzeuge mit einem Bugschild (1), unterhalb dessen der Spoiler montiert ist in der Weise, dass er aus einer ersten, eingefahrenen Position oder Ruhelage in eine zweite, nichteingefahrene Position oder wirksamen Stellung überführbar ist, in welcher er wenigstens zum Teil verhindert, dass der durch die Fahrzeugfortbewegung erzeugte Luftstrom unter dem Fahrzeug vorbeizieht, wobei dieser Spoiler versehen ist mit ersten elastischen Mittel (5,5'), die auf den Spoiler (2;2') eine Kraft ausüben, die der vom Luftstrom ausgeübten entgegengesetzt ist und ihn in die Ruhelage zurückzubringen strebt, und deren Härte derart ist, dass, wenn die Fahrzeuggeschwindigkeit geringer ist als eine vorbestimmte Geschwindigkeit, die Kraft der ersten elastischen Mittel größer ist als jene vom Luftstrom ausgeübte und der Spoiler in Ruhelage gehalten ist, und wenn die Geschwindigkeit die vorbestimmte Geschwindigkeit übertrifft, die Kraft der ersten elastischen Mittel kleiner ist als jene vom Luftstrom ausgeübte und der Spoiler in die wirksame Stellung wechselt; und mit zweiten elastischen Mitteln (7;11;11'), deren Härte größer ist als diejenige der ersten elastischen Mittel (5,5') und welche in der Weise angeordnet sind, dass sie auf den Spoiler nur einwirken, wenn dieser die wirksame Stellung erreicht hat, **dadurch gekennzeichnet, dass** die ersten und die zweiten elastischen Mittel je eine von zwei Federn (5,5',11) sind, die auf einer und derselben Achse (3,8) am Fahrzeug montiert sind.

2. Spoiler nach Anspruch 1, **dadurch gekennzeichnet, dass** jede der beiden Federn aus einer Druckfeder oder Zugfeder (5) oder vorzugsweise aus einer Torsionsfeder besteht.

3. Spoiler nach Anspruch 2, **dadurch gekennzeichnet, dass** die erste und die zweite Torsionsfeder auf der Schwenkachse des Spoilers (2) gelagert sind.

4. Fahrzeug, das einen gefederten Spoiler aufweist, wie er in einem der Ansprüche 1, 2 oder 3 definiert ist.

## Claims

1. Spoiler for a motor vehicle including a front protective moulding (1), at the bottom of which the said spoiler (2; 2') is mounted in such a way as to move from a first, retracted or rest position to a second, non-retracted or active position, in which it prevents at least some of the flow of air created by the movement of the vehicle from passing under the vehicle, the said spoiler comprising first elastic means (5,5'), which apply to the spoiler (2; 2') a force which opposes that applied by the flow of air and tends to bring it back into the rest position, the stiffness of the first elastic means (5, 5') being such that, when the speed of the vehicle is less than the prescribed speed, the force of the first elastic means is greater than that applied by the flow of air and the spoiler is held in the rest position and, when the speed exceeds the prescribed speed, the force of the first elastic means is less than that applied by the flow of air and the spoiler moves into the active position, and comprising second elastic means (7; 11; 11') of greater stiffness than the first elastic means (5, 5') and arranged in such a way that they only act on the spoiler (2, 2') when the latter has reached the active position, **characterized in that** the first elastic means and the second elastic means are, respectively, two springs (5, 5', 11') threaded onto one and the same spindle (3, 8) mounted on the vehicle.

2. Spoiler according to Claim 1, **characterized in that** the springs are both constituted either by a compression spring or by a tension spring (5) or, preferably, by a torsion spring.

3. Spoiler according to Claim 2, **characterized in that** the first and second torsion springs are mounted on the swing pivot of the spoiler (2).

4. Vehicle comprising a spoiler with springs, as defined in one of Claims 1, 2 and 3.
